# EUROPÄISCHE PATENTSCHRIFT

(11) **EP 0 645 034 B1**
(45) Veröffentlichungstag und Bekanntmachung des Hinweises auf die Patenterteilung: **18.09.1996**
(21) Anmeldenummer: 93909804.2
(22) Anmeldetag: 01.06.1993
(51) Int. Cl.: G06F 11/18

(54) **RECHNERSYSTEM**
COMPUTER SYSTEM
SYSTEME INFORMATIQUE

(30) Priorität: 10.06.1992 DE 4219005
(43) Veröffentlichungstag der Anmeldung: 29.03.1995
(73) Patentinhaber: SIEMENS AKTIENGESELLSCHAFT, 80333 München (DE)
(72) Erfinder: REINMUTH, Armin, D-6833 Waghäusel 2 (DE)
(86) Internationale Anmeldenummer: DE9300471
(87) Internationale Veröffentlichungsnummer: WO9325966

(56) Entgegenhaltungen:
- EP-A- 0 316 087
- EP-A- 0 447 576
- DE-A- 3 911 407
- US-A- 4 937 741

## Beschreibung

Die Erfindung betrifft ein Rechnersystem mit mehreren miteinander verbundenen Prozessoren, denen jeweils ein Speicher zugeordnet ist, wobei die Speicher jeweils einen gemeinsamen Speicherbereich aufweisen, auf den die Prozessoren zugreifen.

In Rechnersystemen mit mehreren Prozessoren, die z. B. über einen Bus miteinander kommunizieren und verschiedene Aufgaben gemeinsam bearbeiten, ist es erforderlich, die Verarbeitung zu synchronisieren. Das bedeutet, daß ein Wechsel eines Prozessorbetriebszustandes in einen anderen und/oder die Bearbeitung von System- bzw. Anwenderaufträgen durch die Prozessoren synchron erfolgen muß.

Aus der DE-OS 39 11 407 ist ein redundantes Rechnersystem mit mehreren jeweils einen Speicher aufweisenden Prozessoren bekannt. In jedem Speicher ist jedem Rechner ein Speicherbereich zugeordnet, in den der betreffende Rechner Daten einträgt. Jeder Rechner liest die Daten seiner ihm zugeordneten Speicherbereiche aus und führt die ausgelesenen Daten einem Voter zu, der eine Mehrheitsentscheidung trifft und eine etwaige Abweichung der zugeführten Daten als Fehler meldet. Im störungsfreien Betrieb sind die gleichen Daten neunfach vorhanden, und die Leitungen auf die Speicheranordnungen müssen dreifach ausgelegt sein.

Der vorliegenden Erfindung liegt die Aufgabe zugrunde, das Rechnersystem der eingangs genannten Art im Hinblick auf eine Synchronisation von Betriebszustandswechseln der Prozessoren und/oder eine synchrone Bearbeitung von Prozessoraufträgen zu vereinfachen.

Diese Aufgabe wird durch die im kennzeichnenden Teil des Anspruchs 1 angegebenen Maßnahmen.

Vorteilhafte Ausgestaltungen der Erfindung ergeben sich aus den Unteransprüchen.

Anhand der in der Zeichnung dargestellten Ausführungsbeispiele werden die Erfindung, deren Ausgestaltungen sowie Vorteile näher erläutert.

Es zeigen
- Figur 1: ein Blockschaltbild eines Rechnersystems,
- Figur 2: Betriebszustände und Synchronisationspunkte eines Prozessors und
- Figur 3: den Aufbau eines gemeinsamen Speicherbereichs.

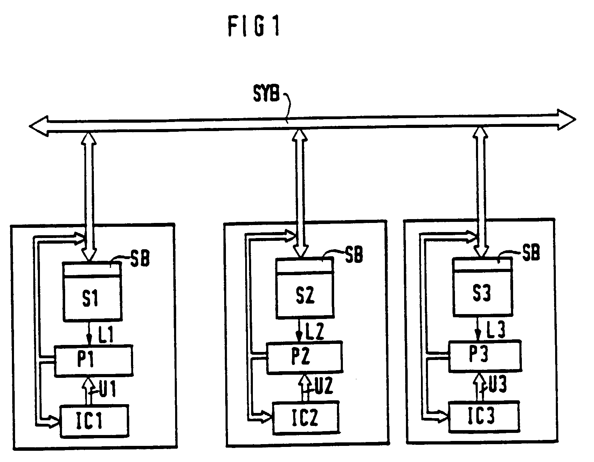

In Figur 1 sind mit P1, P2, P3 Prozessoren von Zentraleinheiten eines Rechnersystems bezeichnet, denen jeweils ein Speicher S1, S2, S3 zugeordnet ist. Diese Prozessoren P1, P2, P3 sind über einen Systembus SYB miteinander verbunden, der mit an sich bekannten Daten-, Adreß- und Steuerleitungen versehen ist. Die Speicher S1, S2, S3 weisen jeweils einen gemeinsamen Speicherbereich SB auf, auf den die Prozessoren P1, P2, P3 jeweils über Leitungen L1, L2, L3 lesend zugreifen, während Schreibzugriffe über den Systembus SYB erfolgen. Mit IC1, IC2, IC3 sind drei zu den jeweiligen Prozessoren P1, P2, P3 gehörende programmierbare Unterbrechungsanordnungen bezeichnet, die eine Änderung eines in dem Speicherbereich SB hinterlegten Datensatzes während eines Schreibzugriffes erkennen, Unterbrechungssignale erzeugen und den zugeordneten Prozessoren P1, P2, P3 über Leitungen U1, U2, U3 zuführen. Schreibt ein Prozessor P2, P3, der während seiner Prozeßbearbeitung einen Synchronisationspunkt erreicht, einen Datensatz in den Speicherbereich SB, wodurch der bereits hinterlegte Datensatz geändert wird, erzeugen die Unterbrechungsanordnungen ein Unterbrechungssignal. Die Prozessoren wechseln dadurch ihren aktuellen Betriebszustand und/oder starten gleichzeitig die Bearbeitung von System- oder Anwenderaufträgen.

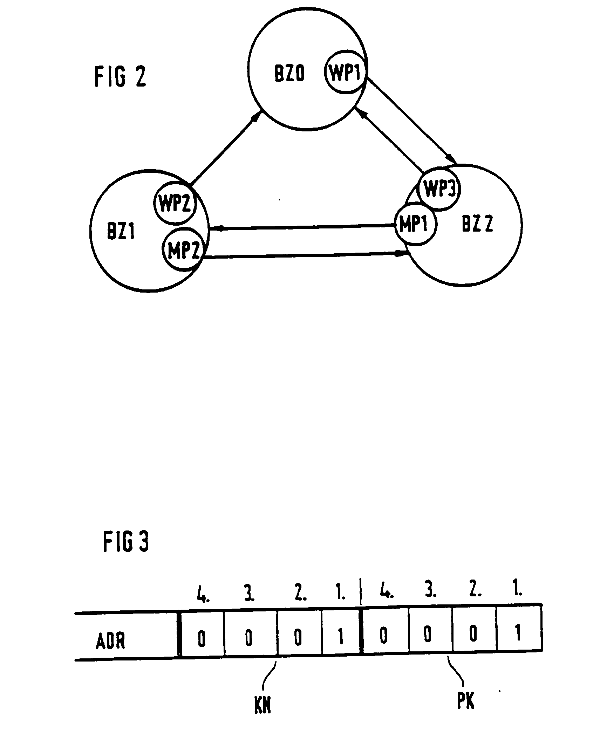

Zur Verdeutlichung der Synchronisation des Wechsels eines Betriebszustandes wird auf Figur 2 verwiesen. Dort sind Betriebszustände BZ0, BZ1, BZ2 und Synchronisationspunkte in Form von sogenannten Meldepunkten MP1, MP2 und Wartepunkten WP1, WP2, WP3 eines Prozessors dargestellt. Die Betriebszustände BZ0, BZ1, BZ2 können z. B. die Zustände "Stop", "Halt", "Anlauf" oder "RUN" darstellen. Zeitunkritische Betriebszustandswechsel, die alle Prozessoren gleichzeitig durchführen, sind durch die Wartepunkte WP1 ... WP3 und zeitkritische Betriebszustandswechsel, die zeitminimal erfolgen, durch die Meldepunkte MP1, MP2 gekennzeichnet. Für den Fall, daß alle Prozessoren P1, P2, P3 sich im Betriebszustand BZ2 befinden und während einer Prozeßbearbeitung der Prozessor P1 den Meldepunkt MP1 erreicht, ändert dieser den Datensatz im gemeinsamen Speicherbereich SB. Diese Änderung erkennen die Unterbrechungsanordnungen IC1, IC2, IC3, die daraufhin den Prozessoren P1, P2, P3 ein Unterbrechungssignal aufschalten, wodurch die Prozessoren ihre aktuellen Prozeßbearbeitungen befehlsgranular unterbrechen und in den Betriebszustand BZ1 wechseln. Die Aufforderung zum Betriebszustandswechsel wird also im vorliegenden Beispiel von dem Prozessor P1 ausgegeben, während die restlichen Prozessoren P2 und P3 dieser Aufforderung sofort nachkommen.

Im Falle eines zeitunkritischen Betriebszustandswechsels, z. B. zum Starten eines Anwenderprogramms, wird dieser Wechsel von allen Prozessoren gleichzeitig durchgeführt. Befinden sich z. B. alle Prozessoren in dem Betriebszustand BZ0 und erreicht der Prozessor P2 den Wartepunkt WP1, so ändert dieser Prozessor den im Speicherbereich SB hinterlegten Datensatz und zeigt somit an, daß ein Betriebszustandswechsel von BZ0 zum Betriebszustand BZ2 erfolgen soll. Der Prozessor P2 bearbeitet seinen Prozeß weiter, und ein Wechsel in den Betriebszustand BZ2 wird erst dann durchgeführt, falls auch die Prozessoren P1 und P3 während ihrer Prozeßbearbeitung diesen Wartepunkt WP1 erreichen.

Figur 3 zeigt den Aufbau eines gemeinsamen Speicherbereichs. Mit einer Adresse ADR greifen die Prozessoren P1, P2, P3 auf den Speicherbereich SB (Figur 1) zu. Dieser Bereich besteht aus einem ersten Teilbereich KN, in dem die Synchronisationspunkte, und aus einem zweiten Teilbereich PK, in dem die Kennungen der Prozessoren jeweils in codierter Form eingetragen sind. Die Teilbereiche KN, PK sind im vorliegenden Beispiel jeweils vier Bit breit organisiert. Es wird angenommen, daß der mit der Adresse ADR ansprechbare Speicherbereich für zeitkritische Synchronisationspunkte, also für die Meldepunkte MP1, MP2, vorgesehen ist und der Prozessor P1 den Meldepunkt MP1 während seiner Prozeßbearbeitung erreicht hat. Dieser Prozessor P1 trägt an die erste Stelle des Teilbereiches KN den Code für den Meldepunkt MP1 in Form einer "1" und an die erste Stelle des Teilbereichs PK seine Prozessorkennung ebenfalls in Form einer "1" ein. Falls die Prozessoren P1, P2, P3 den aktuellen Betriebszustand BZ2 einnehmen, so bewirkt nun dieser Eintrag mit Hilfe der Unterbrechungsanordnung, daß die Prozessoren P1, P2, P3 in den Betriebszustand BZ1 wechseln (Figur 2). Nachdem dieser Wechsel vollzogen ist, lesen die Prozessoren P2 und P3 den Datensatz aus ihrem jeweiligen Speicherbereich SB aus und prüfen anhand der eingetragenen Prozessorkennung, ob alle die am Rechnersystem angeschlossenen Prozessoren den Betriebszustandswechsel vollzogen haben. Liest z. B. der Prozessor P2 den im Speicherbereich SB hinterlegten Datensatz aus, so erkennt dieser, daß lediglich der Prozessor P1 den Meldepunkt MP1 erreicht hat. Daraufhin trägt der Prozessor P2 seine Kennung in den Teilbereich PK in Form einer "1" an die zweite Stelle des Bereiches PK ein und bearbeitet den für diesen Betriebszustand BZ1 zu bearbeitenden Prozeß. Der Prozessor P3 liest ebenfalls den Datensatz aus und erkennt nun, daß die Prozessoren P1 und P2 den Meldepunkt MP1 erreicht und den Wechsel vollzogen haben. Daraufhin löscht der Prozessor P3 diesen Datensatz, und der Speicherbereich SB kann für einen erneuten Betriebszustandswechsel beschrieben werden. Die Unterbrechungsanordnungen IC1, IC2, IC3 erzeugen beim Löschen des gesamten Datensatzes bzw. bei Änderungen des Inhalts im Teilbereich PK kein Unterbrechungssignal zum Wechsel der Betriebszustände.

Für den Fall, daß ein zeitunkritischer Betriebszustandswechsel vollzogen wird, z. B. falls sich die Prozessoren P1, P2, P3 im Betriebszustand BZ0 befinden und der Prozessor P3 den Wartepunkt WP1 erreicht, so wird nicht unmittelbar der Wechsel in den Betriebszustand BZ2 vollzogen. Der Prozessor P3 trägt zunächst, wie im Beispiel des zeitkritischen Betriebszustandswechsels beschrieben, nach der Adressierung des Speicherbereiches SB in den Teilbereich KN den Wartepunkt WP1 und zusätzlich seine Kennung in den Teilbereich PK ein. Die restlichen Prozessoren lesen, nachdem sie ebenfalls diesen Wartepunkt erreicht haben, diesen Datensatz aus und prüfen anhand der bereits hinterlegten Prozessorkennungen, ob alle anderen im System beteiligten Prozessoren diesen Wartepunkt WP1 erreicht haben. Falls nicht alle Prozessoren den Wartepunkt WP1 erreicht haben, trägt der gerade auf den Speicherbereich SB zugreifende Prozessor seine Prozessorkennung ein, wartet auf die Wechselfreigabe in Form des Unterbrechungssignals durch die Unterbrechungsanordnung und führt gegebenenfalls eine befehlsgranular unterbrechbare Prozeßbearbeitung im Betriebszustand BZ0 weiter aus. Für den Fall, daß bereits alle am System beteiligten Prozessoren diesen Wartepunkt WP1 erreicht haben, löscht der zuletzt auf den Speicherbereich zugreifende Prozessor den Inhalt dieses Bereiches. Im Gegensatz zum zeitkritischen Betriebszustandswechsel wird durch das Löschen des Datensatzes ein gleichzeitiger Wechsel aller Prozessoren in den Betriebszustand BZ2 vollzogen.

Für den Fall, daß sowohl System- als auch Anwenderaufträge gleichzeitig gestartet werden sollen, schreibt der einen Auftrag ausgebende Prozessor in den Teilbereich KN in codierter Form die Auftragsnummer des zu startenden Auftrages und wiederum in den zweiten Teilbereich PK nach Bearbeitungsende des Auftrags seine Prozessorkennung. Diese Änderung des Datensatzes in Form der Auftragsausgabe in den Teilbereich KN führt in analoger Art und Weise zu dem bereits beschriebenen zeitkritischen Wechsel eines Betriebszustandes in jedem Prozessor zum Anhalten des gerade ablaufenden Programms und zum Starten des entsprechenden Auftrages.

Um zu unterscheiden, ob die Synchronisation eines zeitkritischen oder zeitunkritischen Betriebszustandswechsels der Prozessoren oder eine synchrone Bearbeitung von Prozessoraufträgen durchzuführen ist, weist der im Speicherbereich SB hinterlegte Datensatz weitere Binärstellen zur Codierung der Synchronisationsformen auf. Zweckmäßig kann man auch derart vorgehen, daß für die verschiedenen Formen der Synchronisation drei gemeinsame Speicherbereiche vorgesehen sind, auf die mit unterschiedlichen Adressen zugegriffen werden kann. Die Unterbrechungsanordnungen IC1, IC2, IC3 sind entsprechend programmiert, um anhand der auf dem Systembus SYB anliegenden Zugriffsadresse zu erkennen, in welcher Weise die Synchronisation durchzuführen ist, um die erforderlichen Unterbrechungssignale rechtzeitig zu erzeugen. Im übrigen werden die verschiedenen Synchronisationsformen mit unterschiedlichen Prioritäten versehen und dem zeitkritischen Betriebszustandswechsel die höchste Priorität zugeordnet.

## Patentansprüche

1. Rechnersystem
- mit mehreren miteinander verbundenen Prozessoren (P1, P2, P3), denen jeweils ein Speicher (S1, S2, S3) zugeordnet ist, wobei die Speicher (S1, S2, S3) jeweils einen gemeinsamen Speicherbereich (SB) aufweisen, auf den die Prozessoren (P1, P2, P3) zugreifen,
dadurch gekennzeichnet,
- daß zur Synchronisation von Betriebszustandswechseln (BZ0, BZ1, BZ2) der Prozessoren (P1, P2, P3) und/oder zur synchronen Bearbeitung von Prozessoraufträgen ein Datensatz in den Speicherbereich (SB) durch den Prozessor eintragbar ist, der zuerst einen vorgegebenen Synchronisationspunkt (MP1, MP2; WP1, WP2, WP3) während einer Prozeßbearbeitung erreicht, und
- daß eine Änderung des Datensatzes durch den Prozessoren (P1, P2, P3) zugeordnete Unterbrechungsanordnungen (IC1, IC2, IC3) erkennbar ist, wodurch Unterbrechungssignale durch die Unterbrechungsanordnungen (IC1, IC2, IC3) erzeugbar und den Prozessoren (P1, P2, P3) zuführbar sind, wodurch ein Betriebszustandswechsel der Prozessoren (P1, P2, P3) und/oder eine synchrone Bearbeitung von Prozessoraufträgen einleitbar ist, wobei Mittel vorgesehen sind, welche den Prozessoren anzeigen, ob die Synchronisation eines zeitkritischen oder zeitunkritischen Betriebszustandswechsels oder eine synchrone Bearbeitung von Prozessoraufträgen durchzuführen ist.

2. Rechnersystem nach Anspruch 1, dadurch **gekennzeichnet**,
- daß zeitkritische Betriebszustandswechsel (BZ0, BZ1, BZ2) der Prozessoren (P1, P2, P3) und/oder die synchrone Bearbeitung von Prozessoraufträgen nach der Einleitung unmittelbar vollziehbar sind.

3. Rechnersystem nach Anspruch 1, dadurch **gekennzeichnet**,
- daß zeitunkritische Betriebszustandswechsel (BZ0, BZ1, BZ2) nach deren Einleitung dann gleichzeitig vollziehbar sind, wenn alle Prozessoren (P1, P2, P3) während der Prozeßbearbeitung die entsprechenden Synchronisationspunkte (WP1, WP2, WP3) erreicht haben.

## Claims

1. Computer system
- having several processors (P1, P2, P3) which are connected to each other and to each of which a memory (S1, S2, S3) is allocated, with the memories (S1, S2, S3) having in each case a common memory area (SB),
which the processors (P1, P2, P3) access,
characterised
- in that in order to synchronise change-overs of operating state (BZ0, BZ1, BZ2) of the processors (P1, P2, P3) and/or in order to process synchronously processor jobs, a data record can be entered into the memory area (SB) by the processor which is the first to reach a predetermined synchronisation point (MP1, MP2; WP1, WP2, WP3) during process-processing, and
- in that a change in the data record can be recognised by interrupt arrangements (IC1, IC2, IC3) allocated to the processors (P1, P2, P3), whereby interrupt signals can be produced by the interrupt arrangements (IC1, IC2, IC3) and supplied to the processors (P1, P2, P3), as a result of which a changeover of operating state of the processors (P1, P2, P3) and/or synchronous processing of processor jobs can be initiated, with means being provided that indicate to the processors whether the synchronisation of a time-critical or non-time-critical operating state changeover or synchronous processing of processor jobs is to be realised.

2. Computer system according to claim 1, characterised
- in that time-critical change-overs of operating state (BZ0, BZ1, BZ2) of the processors (P1, P2, P3) and/or the synchronous processing of processor jobs can be effected directly after the initiation.

3. Computer system according to claim 1, characterised
- in that non-time-critical operating state change-overs (BZ0, BZ1, BZ2) can be effected simultaneously after their initiation when all the processors (P1, P2, P3) have reached the appropriate synchronisation points (WP1, WP2, WP3) during the process-processing.

## Revendications

1. Système informatique
- comportant plusieurs processeurs (P1, P2, P3) reliés les uns aux autres, à chacun desquels est associée une mémoire (S1, S2, S3), les mémoires (S1, S2, S3) comportant une zone (SB) commune de mémoire, à laquelle les processeurs (P1, P2, P3) accèdent,
caractérisé en ce que
- pour la synchronisation de changements (BZ0, BZ1, BZ2) d'état de fonctionnement des processeurs (P1, P2, P3) et/ou pour l'accomplissement en synchronisme de tâches de processeur, un bloc de données peut être introduit dans la zone (SB) de mémoire par le processeur, qui atteint d'abord un point prescrit (MP1, MP2 ; WP1, WP2, WP3) de synchronisation pendant un accomplissement d'un processus,
- un changement du bloc de données peut être reconnu par des dispositifs (IC1, IC2, IC3) d'interruption associés aux processeurs (P1, P2, P3), ce qui permet de produire des signaux d'interruption par les dispositifs (IC1, IC2, IC3) d'interruption et permet de les envoyer aux processeurs (P1, P2, P3), ce qui permet de déclencher un changement d'état de fonctionnement des processeurs (P1, P2, P3) et/ou un accomplissement en synchronisme de tâches de processeur, il est prévu des moyens, qui indiquent aux processeurs, si la synchronisation d'un changement d'état de fonctionnement urgent ou non urgent ou un accomplissement en synchronisme de tâches de processeur doit être effectué.

2. Système informatique suivant la revendication 1, caractérisé en ce que
- des changements (BZ0, BZ1, BZ2) d'état de fonctionnement urgents des processeurs (P1, P2, P3) et/ou l'accomplissement en synchronisme de tâches de processeur peuvent être effectués immédiatement après le déclenchement.

3. Système informatique suivant la revendication 1, caractérisé en ce que des changements (BZ0, BZ1, BZ2) non critiques d'état de fonctionnement peuvent être effectués, après leur déclenchement, en même temps lorsque tous les processeurs (P1, P2, P3) ont atteint pendant l'accomplissement du processus les points (WP1, WP2, WP3) de synchronisation correspondants.
